# EUROPÄISCHE PATENTANMELDUNG

(11) **EP 0 964 068 A1**
(43) Veröffentlichungstag der Anmeldung: **15.12.1999**
(21) Anmeldenummer: 99109826.0
(22) Anmeldetag: 19.05.1999
(51) Int. Cl.: C22B 26/22, C22B 9/05, C22B 21/06, B23K 35/38, B22D 21/02

(54) **Befeuchtete SF6 enthaltende Schutzgasatmosphäre bei der Gewinnung von Magnesium**

(30) Priorität: 09.06.1998 DE 19825644
(71) Anmelder: MESSER GRIESHEIM GMBH, 60547 Frankfurt (DE)
(72) Erfinder: Eschwey, Manfred, Dr., 40489 Düsseldorf (DE); van Bonn, Rolf, 47269 Duisburg (DE); Brenner, Karoly, Dr., 47057 Duisburg (DE); Czegledi, Alexander, 47239 Duisburg (DE)

(57) **Zusammenfassung**

Schutzgase, enthaltend 0,1 bis 1 Volumenprozent SF₆, Wasserdampf und Luft, ein oder mehrere Inertgase oder sauerstoffabgereicherte Luft, werden bei der Herstellung oder Verarbeitung von Magnesium oder Magnesiumlegierungen in der Schmelze mit Vorteil eingesetzt.

## Beschreibung

Die Erfindung betrifft ein Verfahren zur Herstellung und Verarbeitung von Magnesium und Magnesiumlegierungen unter Verwendung von SF₆ als Schutzgas.

Zur Gewinnung und Verarbeitung des Werkstoffes Magnesium und seiner Legierungen ist der Einsatz von SF₆ (Schwefelhexafluorid) im Gemisch mit Luft oder Inertgasen wegen der hohen Reaktivität der Magnesiumschmelze gegenüber Luft notwendig. Das schmelzflüssige Metall überzieht sich in Gegenwart von SF₆-haltigen Gasen mit einer Schicht aus Magnesiumsulfid und Magnesiumfluorid, die das Metall vor weiteren Oxidationen schützt. Diese Vorgehensweise ist mittlererweile in der Technik eingeführt. Sie konnte das früher hierzu häufig eingesetzte SO₂ weitgehend verdrängen (weitaus geringere Toxizität von SF₆ gegenüber SO₂). Allerdings ist der Einsatz von SF₆ in offenen Systemen äußerst kritisch zu bewerten. Problematisch ist vor allem das hohe Treibhauspotential von SF₆ mit einer gegenüber CO₂ um den Faktor 25000 höheren Wirksamkeit.

Aufgabe der Erfindung ist es daher, die eingesetzte Menge und den 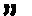 Schlupf" von SF₆ aus Anlagen, die der Gewinnung und Verarbeitung von Magnesium und seinen Liegerungen dienen, wirkungsvoll zu reduzieren.

Überraschenderweise wurde gefunden, daß durch eine Befeuchtung der Ofen-Atmosphäre einerseits die benötigte Menge SF₆ deutlich reduziert werden kann und andererseits die Umsetzung von SF₆ vollständiger abläuft.

Gegenstand der Erfindung ist somit ein Schutzgas für die Herstellung oder Verarbeitung von Magnesium oder Magnesiumlegierungen in der Schmelze, enthaltend 0,1 bis 1 Volumenprozent SF₆, Wasserdampf und Luft oder ein Inertgas.

Das Schutzgas besteht im allgemeinen aus 0,1 bis 1 Volumenprozent SF₆, 0,01 bis 2 Volumenprozent Wasserdampf und Luft oder ein oder mehrere Inertgase, wobei alle Bestandteile des Schutzgases zusammen 100 Volumenprozent ergeben.

Das Schutzgas enthält SF₆ im allgemeinen im Bereich von 0,1 bis 1 Volumenprozent SF₆, bevorzugt im Bereich von 0,2 bis 1 Volumenprozent SF₆ und besonders bevorzugt im Bereich von 0,3 bis 0,8 Volumenprozent SF₆.

Das Schutzgas enthält Wasserdampf maximal bis zur Sättigung. Der Wasserdampfgehalt bei Sättigung ist abhängig von der Temperatur. Das Schutzgas wird beispielsweise im Temperaturbereich von 650 bis 1200 °C, vorzugsweise 700 bis 1000 °C eingesetzt. Das Schutzgas enthält im allgemeinen 0,01 bis 2 Volumenprozent Wasserdampf (100 bis 20000 vpm Wasserdampf), bevorzugt 0,1 bis 1 Volumenprozent Wasserdampf und besonders bevorzugt 0,1 bis 0,5 Volumenprozent Wasserdampf.

Inertgase sind beispielsweise Stickstoff, Edelgase wie Helium, Neon, Argon, Krypton, Xenon oder Kohlendioxid. Es können auch Gemische von zwei oder mehreren Inertgasen eingesetzt werden. Zu den Inertgasen wird in diesem Zusammenhang SF₆ nicht gezählt.

Vorteilhaft wird sauerstoffabgereicherte Luft als Schutzgaskomponente eingesetzt. Das Schutzgas kann auch vorteilhaft ein reduzierendes Gas enthalten, wie vorzugsweise 0,1 bis 4 Volumenprozent Wasserstoff. Luft, sauerstoffabgereicherte Luft und Inertgas, Inertgasgemische oder lufthaltige Inertgasgemische werden im folgenden als Trägergas bezeichnet.

Das Schutzgas wird vorzugsweise in situ erzeugt durch Herstellung eines Gemisches von Trägergas und SF₆ und anschließender Befeuchtung. Das Gemisch von Trägergas und SF₆ wird bevorzugt durch dynamische Mischung der Gase erzeugt, das heißt durch Zumischung von SF₆ in einen Trägergas-Gasstrom. Die Zudosierung von SF₆ kann beispielsweise aus einer Druckgasflasche mit SF₆ über ein Druckreduzierventil und/oder ein Gasdosierventil in eine Gaszufuhrleitung mit Trägergas erfolgen. Geeignete Gasmischsysteme sind dem Fachmann.

Die Befeuchtung des SF₆/Trägergas-Gemisches erfolgt beispielsweise durch einen Gaswäscher oder im einfachsten Fall durch eine Gaswaschflasche mit Wasser. Die Temperatur des Wassers zur Befeuchtung liegt üblicherweise im Bereich von Raumtemperatur (20 °C) bis 95°C. Der Grad der Befeuchtung hängt ab von der Wassertemperatur des Befeuchters. Vorzugsweise ist die Wassertemperatur durch ein Thermostat geregelt. Zur Befeuchtung werden vorteilhaft handelsübliche Befeuchtersysteme (z. B. der Firma Aerodyne) für Gase eingesetzt.

Das befeuchtete Schutzgas kann auch in situ bei der Handhabung der Metallschmelze hergestellt werden. Beispielsweise kann in die Ofenatmosphäre über der Metallschmelze Wasser oder Wasserdampf in definierten Mengen zugeführt werden.

Ein weiterer Gegenstand der Erfindung ist ein Verfahren zur Herstellung oder Verarbeitung von Magnesium oder Magnesiumlegierungen in der Schmelze, wobei die Schmelze in Gegenwart einer Gasatmosphäre gehandhabt wird, die 0,1 bis 1 Volumenprozent SF₆ und Wasserdampf enthält.

### Beispiel

Zum erfindungsgemäßen Nachweis wurden Messungen der Betriebsatmosphäre an Mg-Schmelzöfen mittels FT-IR-Spektroskopie durchgeführt. Das 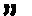 trockene" (weniger als 20 vpm H₂O) SF₆/Luftgemisch (0,35 % SF₆ = 3500 vpm SF₆) wurde mittels eines handelsüblichen Befeuchtersystems definiert mit Wasserdampf beladen. Dabei ist die Wasserdampfkonzentration eine Funktion der durchgesetzten Luftmenge und der Wassertemperatur. Das befeuchtete SF₆/Luftgemisch wird durch den Ofen geleitet und am Ofenausgang analysiert. Die Wasserdampfkonzentration wird gleichzeitig mit der SF₆-Konzentration mittels FT-IR-Spektroskopie gemessen.

Die Ergebnisse in der Tabelle zeigen, daß der SF₆-Schlupf (nicht umgesetztes SF₆) gegenüber dem trockenen Gas bei einer Befeuchtung des Einsatzgases um den Faktor drei abgesenkt werden kann.

**Tabelle**

| SF₆-Konzentration am Ofenausgang in Abhängigkeit von der Wasserdampfbeladung des eingesetzten Gases | | | | | |
|---|---|---|---|---|---|
| | H₂O / vpm | | | | |
| | <20 | 900 | 1400 | 3200 | 5400 |
| SF₆ / vpm | 1820 | 1100 | 1000 | 580 | 650 |

## Patentansprüche

1. Schutzgas für die Herstellung oder Verarbeitung von Magnesium oder Magnesiumlegierungen in der Schmelze, enthaltend 0,1 bis 1 Volumenprozent SF₆, Wasserdampf und ein Trägergas.

2. Schutzgas nach Anspruch 1, dadurch gekennzeichnet, daß 0,01 bis 2 Volumenprozent Wasserdampf enthalten sind.

3. Schutzgas nach Anspruch 1 oder 2, dadurch gekennzeichnet, daß Luft, ein oder mehrere Inertgase oder sauerstoffabgereicherte Luft als Trägergas dienen.

4. Verfahren zur Herstellung oder Verarbeitung von Magnesium oder Magnesiumlegierungen in der Schmelze, dadurch gekennzeichnet, daß die Schmelze in Gegenwart eines Schutzgases nach einem der Ansprüche 1 bis 3 eingesetzt wird.

5. Verwendung des Schutzgases nach einem der Ansprüche 1 bis 3 bei Temperaturen im Bereich von 700 bis 1200 °C.

6. Verwendung von wasserdampfhaltigen SF₆-haltigen Gasen bei der Herstellung oder Verarbeitung von Magnesium oder Magnesiumlegierungen in der Schmelze.
